# EUROPÄISCHE PATENTSCHRIFT

(11) **EP 1 370 191 B1**
(45) Veröffentlichungstag und Bekanntmachung des Hinweises auf die Patenterteilung: **19.05.2010**
(21) Anmeldenummer: 02737890.0
(22) Anmeldetag: 20.03.2002
(51) Int. Cl.: A61C 13/12, A61C 13/20, F27B 17/02

(54) **VERFAHREN ZUM DRAHTLOSEN ÜBERTRAGEN VON DENTALPROZESSDATEN**
METHOD FOR WIRELESS TRANSMISSION OF PROCESS DATA
PROCEDE DE TRANSMISSION SANS FIL DE DONNEES D'UN PROCES DENTAIRE

(30) Priorität: 21.03.2001 DE 10113753
(43) Veröffentlichungstag der Anmeldung: 17.12.2003
(73) Patentinhaber: DENTSPLY DETREY GmbH, 78467 Konstanz (DE)
(72) Erfinder: BUCHNER, Kerstin, 64646 Heppenheim (DE); ERTL, Thomas, 63303 Dreieich (DE); HAUNER, Wigbert, 63225 Langen (DE)
(74) Vertreter: Wächtershäuser, Günter
(86) Internationale Anmeldenummer: PCT/EP2002/003138
(87) Internationale Veröffentlichungsnummer: WO 2002/076330

(56) Entgegenhaltungen:
- EP-A- 0 574 757
- EP-A- 1 133 954

## Beschreibung

Die Erfindung betrifft ein Verfahren zum drahtlosen Übertragen von Prozessdaten im Dentallabor mittels eines stationären Senders und eines tragbaren Empfängers. Insbesondere stammen die Prozessdaten von Dentalgeräten, wie beispielsweise einem Brennofen.

In einem Dentallabor werden von einem Zahntechniker in der Regel mehrere Produktionsprozesse gleichzeitig betrieben. Zu diesem Zweck existieren in einem Dentallabor üblicherweise mehrere Arbeitsstationen, die von einem Zahntechniker für die Durchführung einzelner Produktionsschritte genutzt werden können. An den Arbeitsstationen werden typischerweise Brennöfen, Wachsschmelzgeräte, Kompositlichthärtegeräte, Galvanogeräte, Dampfstrahler, Sterilisiereinrichtungen, Giessgeräte, Vorwärmöfen, Ausbrennöfen, Pressöfen oder CAD/CAM-Fräsgeräte betrieben. Diese Geräte erlauben in zunehmendem Maße eine automatische Prozessführung, so dass die physische Anwesenheit des Zahntechnikers an der Arbeitsstation während der automatisierten Prozessphasen entbehrlich ist. Der Zahntechniker kann sich in dieser Zeit einem parallelen Produktionsprozess an einer anderen Arbeitsstation widmen. Es ist jedoch oft erforderlich, dass der Zahntechniker den automatisierten Vorgang überwacht, um bei Störungen in den Prozess einzugreifen oder um den Produktionsprozess fortzuführen. Dazu ist es erforderlich, dass der Zahntechniker Prozessdaten der Arbeitsstationen prüft. In Abhängigkeit von der Organisation und Grösse eines Dentallabors kann es vorkommen, dass die einzelnen Arbeitsstationen, die der Zahntechniker bei der parallelen Durchführung mehrerer Produktionsprozesse nutzt, nicht ohne weiteres überwacht werden können ohne dass er die zu überwachenden Arbeitsstation aufsuchen muss.

Die Darstellung von Prozessdaten im Dentallabor, insbesondere bei den Vakuumbrennöfen, ist seit langem bekannt. Konstruktiv bestehen sie im Wesentlichem aus Leuchtdioden, alphanumerischen oder grafikfähigen Bildschirmen und sind als integraler Bestandteil der Steuerung direkt mit dem Vakuumbrennofen verbunden. Zur besseren Erkennung der Prozessdaten aus größerer Entfernung werden große Anzeigen verwendet. Auch die Anzeige der für den Bediener wichtigsten Prozessdaten auf der höchsten Stelle des Brennofens mittels Anzeigen ist bekannt.

Nachteilig bei allen diesen Lösungen ist der Umstand, dass der Bediener zum Erkennen der laufenden Prozessdaten das Gerät immer im Blickkontakt haben muss. Für den Fall, dass ein Blickkontakt nicht möglich ist, weil sich der Zahntechniker an einer anderen Arbeitsstation befindet, muss er sich den Blickkontakt dadurch verschaffen, dass er sich zu der zu überwachenden Arbeitsstation begibt. Auf diese Weise wird wertvolle Arbeitszeit des Zahntechnikers auf den Wegen zwischen den Arbeitsstationen verbraucht. Weiterhin kann es sein, dass die Überwachung es notwendig macht, dass sich der Zahntechniker so häufig zu der zu überwachenden Arbeitsstation begeben muss, dass die parallele Durchführung eines weiteren Arbeitsschrittes in einem anderen Produktionsprozess verhindert wird. Schliesslich kann es sein, dass der Zahntechniker nicht rechtzeitig erkennt, dass ein Eingriff seinerseits in einen automatisierten Prozess notwendig ist, weil er nicht rechtzeitig den Blickkontakt mit der zu überwachenden Arbeitsstation herstellen konnte. Die angestrebte parallele Durchführung mehrerer Produktionsprozesse im Dentallabor wird daher durch den notwendigen Blickkontakt mit dem zu überwachenden Gerät bei der Überwachung beeinträchtigt so dass nur eine geringe Anzahl von Produktionsprozessen von einem einzelnen Zahntechniker parallel betrieben werden kann.

Es ist daher Aufgabe der Erfindung ein Verfahren bereitzustellen, dass es dem Zahntechniker ermöglicht eine größere Anzahl paralleler Produktionsprozesse rationell und zuverlässig durchzuführen, wobei eine Überwachung mehrerer Arbeitsstationen möglich ist auch wenn der Zahntechniker die Anzeigevorrichtungen dieser Gräte nicht im Blick hat.

EP-A-0 574 757 beschreibt einen Brennofen mit mehreren Zonen, in welchen fahrbare Gestelle mit Brenngut eingeschoben sind. Jedes Gestell weist ein Messwerterfassungssystem auf, das einen Rechner aufweist, zu dem Daten von Messwertaufnehmern am Brenngut und in der Zone über Kabel geleitet werden. Der Rechner ist mit einem Sender zum drahtlosen Übermitteln der Messwerte an einen Empfänger verbunden. Am Empfänger ist es möglich, die Messwerte oder Prozessdaten selektiv darzustellen.

EP-A-1 133 954, das am 19.09.2001 veröffentlicht worden ist, beschreibt den parallelen Betrieb von mehreren dentalen Brennöfen. Jeder Brennofen ist mit einem Sender ausgestattet, der das Ende des Brennvorganges drahtlos an einen Empfänger übermittelt. Die Sender geben kodierte Signale ab, so dass Signale verschiedener Sender unterscheidbar sind.

Die Erfindung löst die gestellte Aufgabe mit einem Verfahren, das die Merkmale der Ansprüche aufweist.

Die vorliegende Erfindung betrifft ein Verfahren zur Übertragung von Prozessdaten über eine größere Entfernung, wobei die Prozessdaten mittels eines Senders und Empfängers drahtlos Übertragen werden. Bei den Prozessdaten handelt es sich um Daten die von Dentalgeräten erzeugt werden. Typische Dentalgeräte sind Brennöfen, Wachsschmelzgeräte, Kompositlichthärtegeräte, Galvanogeräte, Dampfstrahler, Sterilisiereinrichtungen, Giessgeräte, Vorwärmöfen, Ausbrennöfen, Pressöfen, oder CAD/CAM-Fräsgeräte. Die Prozessdaten betreffen Parameter, die für eine Überwachung durch den Zahntechniker notwendig oder zumindest sinnvoll sind. Diese Prozessdaten können solche Daten sein, die der Zahntechniker auch über eine herkömmliche in dem Gerät integrierte Ausgabeeinrichtung abrufen kann. Darüber hinaus können aber auch weitere Daten übertragen werden, die gerade bei Fehlen eines Blickkontaks mit dem Gerät nützlich sind. So kann die Identität des Benutzers des Geräts abrufbar sein oder Einzelheiten hinsichtlich des bearbeiteten Gegenstandes bis hin zu Daten, die der Arbeitsstation von einer Datenbank über ein Netzwerk zugänglich gemacht werden. Vorzugsweise betreffen die Prozessdaten mindestens zwei Parameter, die den Status des Prozesses zu einem gegebenen Zeitpunkt beschreiben.

Typische Prozessdaten eines Brennofens sind die Brenntemperatur, die Brennzeit, die Vakuumhöhe, die noch verbleibende Restlaufzeit, Programmzeit, die noch

verbleibenden Brennzeit, das programmierte Temperaturprogramm sowie Daten, die den zu brennenden Gegenstand betreffen.

Der Sender ist mit dem Dentalgerät verbunden. In einer Ausführungsform enthält jedes Dentalgerät einen eigenen Sender. In einer bevorzugten Ausführungsform ist ein Dentalgerät an einen externen Sender angeschlossen, der Daten von mehreren Dentalgeräten überträgt. In einer besonders bevorzugten Ausführungsform ist eine zentrale Sendeeinheit vorgesehen, die den Anschluss von bis zu sechs Geräten, vorzugsweise Brennöfen, erlaubt. Dieser Sender ist vorzugsweise stationär. Vorteilhafterweise erfolgt der Anschluss der Geräte an die zentrale Sendeeinheit mit Standardkabeln, beispielsweise RJ45-Kabeln, über eine geeignete Schnittstelle der Geräte. Die Prozessdaten können direkt oder mittels einer Datenweiche dem Sender zugeführt werden. Die Datenweiche kann als spezieller Multiplexer auch integraler Bestandteil des Senders sein. Beispielsweise weist die zentrale Sendeeinheit mehrere Eingänge auf, wobei jedem Eingang eine feste Adresse zugeordnet wird. Bei Einschaltung der Stromversorgung fragt die Sendeeinheit zyklisch alle Anschlüsse auf das Vorhandensein eines Gerätes ab. Jedes erkannte Gerät wird danach zyklisch von der zentralen Sendeeinheit mit einem Timeout, das beispielsweise 80 ms betragen kann, auf seine Prozessdaten hin abgefragt. Die Dauer eines Zyklus kann im Bereich von 100 ms bis 1 min liegen. Die von dem Gerät übermittelten Daten werden in der zentralen Sendeeinheit gespeichert. Die gespeicherten Daten werden anschliessend aus dem Speicher gelesen und in einem Datenrahmen über die Funkstrecke gesendet. Vorteilhafterweise werden die Prozessdaten für jeden Parameter jeweils durch eine konstante Datenmenge, wie beispielsweise 2 Byte übertragen. Die Prozessdaten werden drahtlos von dem Sender zu einem Empfänger gesendet. Der Sender sendet ein Signal aus, das im Hinblick auf das benutzte Frequenzband keinen besonderen Einschränkungen unterliegt. Es hat sich jedoch als vorteilhaft erwiesen, wenn der Sender ein ISM-Band, wie beispielsweise mit einer Frequenz von 433,92 Mhz, verwendet. Insbesondere ist bevorzugt, wenn der Sender eine sogenannte Low Power Device (LPD) ist, die eine Sendeleistung von maximal 12 mW aufweist. Es hat sich gezeigt, dass diese Sendeleistung in Kombination mit der verwendeten Frequenz geeignet ist auch unter widrigen Bedingungen, wie sie in grossen Dentallabors anzutreffen sind, zuverlässig Daten über weite Strecken zu übertragen.

Das von dem Sender ausgesendete Signal wird von einem Funkempfänger empfangen. Der Empfänger kann in einer bevorzugten Ausführungsform durch eine spezielle Kodierung der Signale vorher ausgewählt werden. Die Auswahl kann vorteilhafterweise an dem Dentalgerät erfolgen. Es ist aber auch möglich, die Auswahl an der zentralen Sendeeinheit oder an dem Empfänger einzustellen. Es ist auch möglich, dass Daten an mehr als einen Empfänger übermittelt werden. Auf diese Weise ist es möglich, dass mehrere Zahntechniker gleichzeitig über die Prozessdaten informiert werden. Ausserdem ist es auf diese Weise möglich, das Dentalgerät in ein zentrales Qualitätssicherungssystem einzubeziehen, das alle Prozessdaten erfasst, abspeichert und auswertet.

Der Empfänger wird vorteilhafterweise von einer mobilen Stromquelle, wie einer Batterie oder einem Akku mit Strom versorgt, so dass der Empfänger von dem Zahntechniker getragen werden kann. Der Empfänger kann durch Tastendruck aktiviert bzw. deaktiviert werden. In einer bevorzugten Ausführungsform schaltet sich der Empfänger ab, sobald während einer einstellbaren Zeit von beispielsweise 1,5 min, keine für den speziellen Sender bestimmten Daten empfangen wurden. Soweit der Empfänger Daten empfängt, die für ihn bestimmt sind, so werden diese Daten von dem Empfänger gespeichert. Der Empfänger speichert jeweils einen Satz Prozessdaten zu mehreren Parametern, die den Status des Dentalgerätes zu einem bestimmten Zeitpunkt darstellen. Diese Daten werden unmittelbar nach dem Empfang über den Sender an alle Empfänger ausgstrahlt. Bei dem Display handelt es sich vorteilhafterweise um ein vollgrafisches Display, das die Prozessdaten in geeigneter Form darstellt. Es ist möglich, dass die Daten gleichzeitig angezeigt werden. Bevorzugt ist es jedoch, dass der Zahntechniker den gewünschten Parameter auswählt und die zu diesem Parameter passenden Prozessdaten anschließend auf dem Display angezeigt werden.

Die erfindungsgemäßen Vorteile dieses Verfahrens und der Vorrichtung sind im Wesentlichen darin zu sehen, dass mittels eines mit dem Brennofen (1) verbundenen stationären Senders (3) die informativen Prozessdaten eines ablaufenden Programms drahtlos zu einem tragbaren Empfänger (4) übertragen werden und damit der Bediener, zur Erlangung der gewünschten Information, nicht mehr notwendigerweise mit dem Gerät Blickkontakt haben muss.

Erfindungsgemäß werden mehrere Brennöfen oder Dentalgeräte mittels einer Datenweiche (2) an den Sender (3) angeschlossen, um die Prozessdaten mit dem tragbaren Empfänger nacheinander gezielt abzufragen oder selektiv darstellen zu lassen. Bei von mehreren Bedienpersonen betriebenen Geräten lassen sich vorzugsweise auch mehrere tragbare Empfänger (4) einsetzen, wobei das einzelne Gerät und der zugehörige Empfänger durch vorwählbare Adressen einander zugeordnet sind.

Die Reichweite der drahtlosen Übertragung von Prozessdaten liegt in Abhängigkeit von der Bauweise des Senders und Empfängers bei bis zu mehreren Kilometern vorzugsweise im Dentallaborbereich bis zu ca. 30 m.

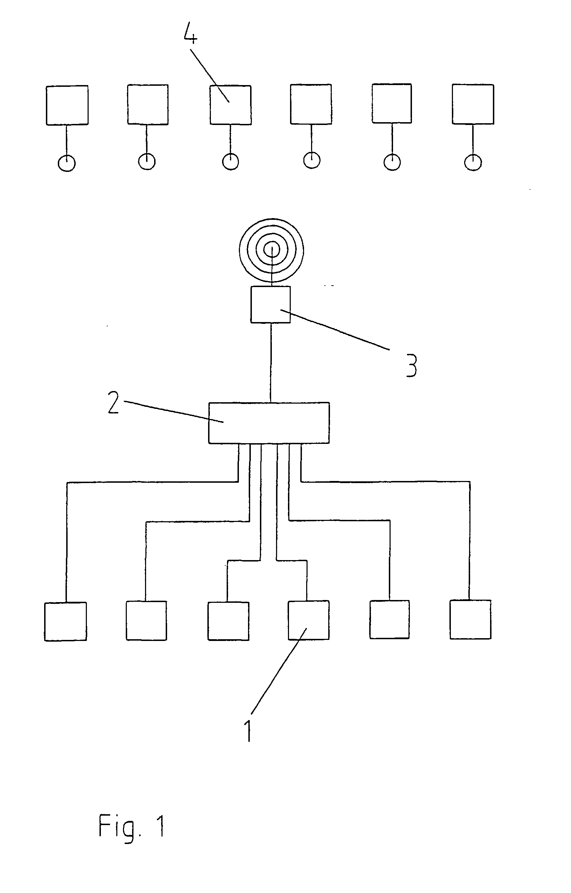

Fig. 1 stellt das Verfahren zur drahtlosen Übertragung der Prozessdaten dar. Gemäß Figur 1 betrifft die erfindungsgemäße Vorrichtung ein System aus einem Sender (3) und mindestens einem Empfänger (4). Sender und Empfänger sind nicht über eine Kabelverbindung miteinander verbunden. Der Sender (3) ist mit einer Datenweiche (2) verbunden. Sender (3) und Datenweiche (2) sind vorzugsweise im selben Gehäuse einer zentralen Sendeeinheit enthalten. An die zentrale Sendeeinheit können vorzugsweise bis zu sechs Geräte angeschlossen werden. Die Datenweiche enthält eine Steuerungselektronik, die mit den Geräteeingängen verbunden ist. Die Steuerungselektronik ist andererseits mit einer Sendereinheit verbunden und so eingestellt, dass der Sender die Prozessdaten von bis zu sechs Geräten sequentiell senden kann. Vorzugsweise wird der Sender so ausgewählt, dass die Prozessdaten über eine größere Entfernung gesendet werden können. Insbesondere ist es möglich, dass Prozessdaten erzeugende Geräte einzeln unterschiedlichen Empfängern zugeordnet werden können.

Der Empfänger einer erfindungsgemäßen Vorrichtung umfasst eine Antenne zum Empfang der vom Sender gesendeten Prozessdaten. Die Antenne ist mit einer Steuerelektronik verbunden, die die empfangenen Prozessdaten speichern und verarbeiten kann. Die Steuerelektronik ist einerseits mit einem Displaycontroller verbunden. Der Displaycontroller ist mit einer Anzeige verbunden. Der Displaycontroller ist vorteilhafterweise ein LCD-Controller, der mit einem LCD-Modul verbunden ist. Die Steuerelektronik ist geeignet die Prozessdaten, zu verarbeiten. Es ist bevorzugt, dass der Zahntechniker über eine Eingabemöglichkeit auf die Verarbeitung der Prozessdaten einwirken kann. Beispielsweise kann der Zahntechniker einen bestimmten Parameter oder ein bestimmtes Gerät durch eine Eingabe auswählen, so dass die Steuerelektronik die zu diesem Parameter oder Gerät gehörenden Prozessdaten an den Displaycontroller in geeigneter Form übermittelt, so dass die ausgewählten Daten auf der Anzeige erscheinen.

Erfindungsgemäß kann in einem Dentallabor jedes geeignete Dentalgerät mit der zentralen Sendeeinheit verbunden werden. Der Zahntechniker trägt einen Empfänger und kann diesem ein oder mehrere Dentalgeräte zuordnen. Für den Fall, dass ein Dentalgerät, das seinem Empfänger zugeordnet ist über die zentrale Sendeeinheit Daten sendet, kann der Zahntechniker diese Daten mit seinem Empfänger enpfangen und auf der Anzeige des Empfängers abrufen. Durch die Eingabemöglichkeit am Empfänger ist der Zahntechniker in der Lage aus den in seinem Empfänger gespeicherten Prozessdaten die für ihn relevanten Daten auszuwählen und abzurufen ohne mit der Geräteanzeige in Blickkontakt zu treten.

## Patentansprüche

1. Verfahren zur Übertragung von Prozessdaten von Dentalgeräten über eine größere Entfernung, bei der die Prozessdaten von mehreren Dentalgeräten mittels einer Datenweiche (2) einem Sender zugeführt und drahtlos zu einem oder mehreren Empfängern gesendet werden, und die Prozessdaten mit dem Empfänger abgefragt oder selektiv dargestellt werden.

2. Verfahren nach Anspruch 1, wobei Prozessdaten von einem Dentalgerät stammen, das ein Brennofen ist.

3. Verfahren nach Anspruch 1, wobei die Prozessdaten mindestens zwei Parameter betreffen, die den Status des Prozesses zu einem gegebenen Zeitpunkt beschreiben.

4. Verfahren nach einem der Ansprüche 1 bis 3, wobei der Sender ein stationärer Sender ist und ein Empfänger tragbar ist.

5. Verfahren nach einem der Ansprüche 1 bis 4, wobei die Prozessdaten einem laufenden Programm des Dentalgerätes entsprechen.

6. Verfahren nach einem der Ansprüche 1 bis 5, wobei mehrere tragbare Empfänger vorgesehen sind und jedes einzelne Dentalgerät und jeder Empfänger durch vorwählbare Adressen einander zugeordnet werden können.

## Claims

1. Process for the transmission of process data from dental devices over a long distance, by which the process data from multiple dental devices are fed by means of a data switch (2) to a transmitter and are wirelessly sent to one or more receivers, and the process data are retrieved with the receiver or presented selectively.

2. Process according to claim 1, wherein process data come from a dental device which is a firing kiln.

3. Process according to claim 1, wherein the process data involve at least two parameters which describe the status of the process at a given point in time.

4. Process according to one of claims 1 to 3, wherein the transmitter is a stationary transmitter and a receiver is portable.

5. Process according to one of claims 1 to 4, wherein the process data correspond to a running program of the dental device.

6. Process according to one of claims 1 to 5, wherein multiple portable receivers are provided and each individual dental device and each receiver can be assigned to one another through preselectable addresses.

## Revendications

1. Procédé pour la transmission de données de processus d'appareils dentaires sur une distance assez grande, dans lequel les données de processus sont amenées de plusieurs appareils dentaires au moyen d'un dispositif de séparation des données (2) à un émetteur et sont envoyées sans fil à un ou plusieurs récepteurs, et les données de processus sont interrogées avec le récepteur ou présentées de façon sélective.

2. Procédé selon la revendication 1, dans lequel des données de processus proviennent d'un appareil dentaire qui est un four de cuisson.

3. Procédé selon la revendication 1, dans lequel les données de processus concernent au moins deux paramètres qui décrivent l'état du processus à un moment donné.

4. Procédé selon l'une quelconque des revendications 1 à 3, dans lequel l'émetteur est un émetteur fixe et un récepteur est portatif.

5. Procédé selon l'une quelconque des revendications 1 à 4, dans lequel les données de processus correspondent à un programme en cours de l'appareil dentaire.

6. Procédé selon l'une quelconque des revendications 1 à 5, dans lequel plusieurs récepteurs portatifs sont prévus et chaque appareil dentaire individuel et chaque récepteur peuvent être attribués les uns aux autres par des adresses pouvant être préselectionnées.
